# EUROPÄISCHE PATENTSCHRIFT

(11) **EP 1 106 444 B1**
(45) Veröffentlichungstag und Bekanntmachung des Hinweises auf die Patenterteilung: **01.09.2004**
(21) Anmeldenummer: 00125238.6
(22) Anmeldetag: 23.11.2000
(51) Int. Cl.: B60R 21/16

(54) **Seitenaufprall-Schutzsystem für Fahrzeuge**
Side collision protection system for vehicles
Système de protection pour véhicules agissant en cas d'impact latéral

(30) Priorität: 06.12.1999 DE 29921414 U
(43) Veröffentlichungstag der Anmeldung: 13.06.2001
(73) Patentinhaber: TRW Automotive GmbH, 73553 Alfdorf (DE)
(72) Erfinder: Herzog, Frank, 73655 Plüderhausen (DE)
(74) Vertreter: Degwert, Hartmut, Dipl.-Phys.

(56) Entgegenhaltungen:
- EP-A- 0 814 001
- EP-A- 0 940 304
- EP-A- 0 978 421
- GB-A- 2 327 066

## Beschreibung

Die Erfindung betrifft ein Seitenaufprall-Schutzsystem für Fahrzeuge, mit einem aufblasbaren langgestreckten Schutzkissen, das an seinem vorderen Ende und seinem hinteren Ende jeweils mittels eines spannbandes zwischen festen Punkten im Fahrzeug verspannt wird.

Bei einem solchen Schutzsystem erstreckt sich das aufgeblasene Schutzkissen von der Dachkante des Fahrzeugs abwärts bis zur Höhe der Türbrüstung sowie zwischen der A-Säule und der C-Säule des Fahrzeugs, so daß sowohl die Seitenscheiben als auch die Säule flächig abgedeckt werden. Man ist allgemein bestrebt, das aufgeblasene Schutzkissen zwischen einem Punkt am unteren Ende der A-Säule und einem Punkt der C-Säule zu verspannen, um einerseits beim Seitenaufprall Querkräfte abzufangen und andererseits den Entfaltungsprozeß des Schutzkissens zu begünstigen. Da das Schutzkissen im Ruhezustand mit dem vorderen und dem hinteren Spannband entlang einer gekrümmten Dachkante im Fahrzeug verstaut wird, der untere Randbereich des Schutzkissens im aufgeblasenen Zustand aber im wesentlichen gerade ist, kann eine Abspannung des aufgeblasenen Schutzkissens im Fahrzeug nur durch besondere Maßnahmen erreicht werden. Es wurde bereits vorgeschlagen, den Gassack in mehrere gestreckte, parallele und senkrechte Kammern aufzuteilen, so daß durch die Wölbungen der einzelnen Kammern eine natürliche Verkürzung des Schutzkissens in Längsrichtung eintritt. Es hat sich aber gezeigt, daß diese Verkürzung zur effektiven Abspannung des Schutzkissens im Fahrzeug nicht ausreicht. Ferner wurde vorgeschlagen, eine aktive Verspannung durch z.B. pyrotechnisch aktivierte Spanneinrichtungen nach Art eines Gurtstraffers anzuwenden. Diese Lösung erfordert jedoch einen hohen technischen Aufwand.

Aus der GB-A-2 327 066 ist ein gattungsgemässer Seitengassack bekannt, der mittels zweier Spannbänder an seinem vorderen und hinteren Ende zwischen festen Punkten im Fahrzeug verspannt wird. Eines der Spannbänder weist aufblasbare Kammern auf, die so ausgebildet sind, daß sich die Länge des Spannbandes beim Aufblasen des Gassacks verkürzt.

Aus der nachveröffentlichten EP-A-0 978 421 ist ein Seitengassack bekannt, der an einem seiner Enden mit einem Spannband verbunden ist. Das Spannband verzweigt an seinem dem Seitengassack zugewandten Ende in zwei Abschnitte, die in verschiedener Höhe am aufgeblasenen Schutzkissen angreifen.

Durch die Erfindung wird ein Seitenaufprall-Schutzsystem für Fahrzeuge geschaffen, bei dem die angestrebte Verspannung des aufgeblasenen Schutzkissens im Fahrzeug mit einfachsten Mitteln unter Ausnutzung geometrischer Verhältnisse gewährleistet wird. Gemäß der Erfindung verzweigt wenigstens eines der Spannbänder an seinem dem Schutzkissen zugewandten Ende in zwei Spannbandabscbnitte, die in verschiedener Höhe am aufgeblasenen Schutzkissen angreifen, wobei die zwei Spannbandabschnitte im gespannten Zustand einen stumpfen Winkel miteinander bilden. Im Ruhezustand des Schutzkissens liegen diese zwei Spannbandabschnitte übereinander, entsprechend dem Verlauf der Dachkante, entlang welcher die Spannbänder mit dem gefalteten Schutzkissen verstaut sind. Bei der Entfaltung und Ausdehnung des Schutzkissens tritt dann aber eine Spreizung der zwei Spannbandabschnitte ein, da sie am Ende des Spannbandes miteinander verbunden sind und in unterschiedlicher Höhe am aufgeblasenen Schutzkissen angeschlossen sind. Durch diese Spreizung der zwei Spannbandabschnitte ergibt sich eine Verkürzung der effektiven Abspannlinie um etwa die Hälfte der Länge eines Spannbandabschnitts. Diese Verkürzung der effektiven Abspannlinie wird zur Verspannung des aufgeblasenen Schutzkissens zwischen zwei festen Punkten im Fahrzeug genutzt.

Die so erzielte Verkürzung der effektiven Abspannlinie ist um so größer, desto größer der Winkel ist, den die zwei Spannbandabschnitte im aufgeblasenen Zustand des Schutzkissens miteinander bilden. Die Spannbandabschnitte bilden daher im gespannten Zustand einen stumpfen Winkel miteinander.

Die durch die Erfindung erzielte Verkürzung der effektiven Abspannlinie ist auch um so größer, je länger die zwei Spannbandabschnitte sind. Bei der bevorzugten Ausführungsform ist daher das Ende eines der Spannbandabschnitte am unteren Randbereich des aufgeblasenen Schutzkissens angeschlossen, und das Ende des anderen Spannbandabschnitts greift etwa auf halber Höhe des aufgeblasenen Schutzkissens oder noch darüber an diesem an.

Weitere Vorteile und Merkmale der Erfindung ergeben sich aus der folgenden Beschreibung einer bevorzugten Ausführungsform und aus den Zeichnungen, auf die Bezug genommen wird. In den Zeichnungen zeigen:
Fig. 1 schematisch eine Seitenansicht eines aufgeblasenen Schutzkissens, das mittels Spannbändern im Fahrzeug verspannt ist; und
Fig. 2 eine vergrößerte Detailansicht zur Erläuterung der Wirkungsweise der Erfindung.

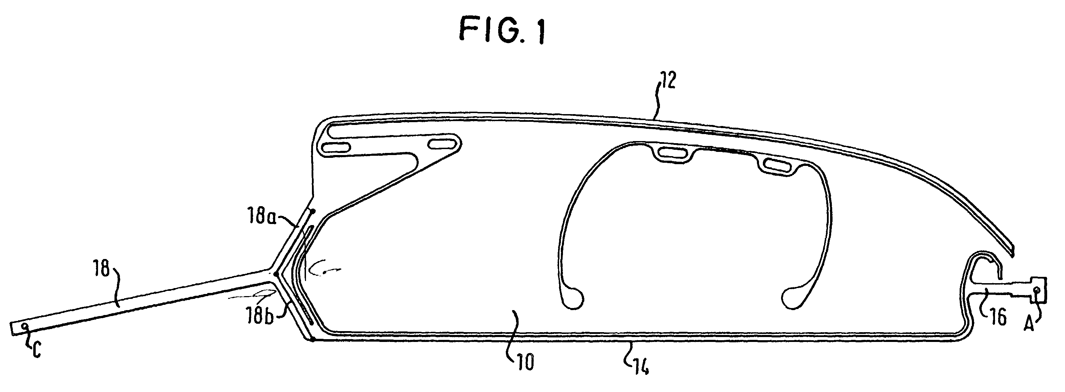

Das in Fig. 1 im aufgeblasenen Zustand gezeigte Schutzkissen 10 erstreckt sich von der gekrümmten oberen Dachkante 12 des Fahrzeugs abwärts bis zu einem unteren Randbereich 14 und in Längsrichtung des Fahrzeugs zwischen der A-Säule und der C-Säule. Ein solches Schutzkissen, das auch als aufblasbarer Vorhang bezeichnet wird, deckt im aktivierten Zustand die Seitenscheiben des Fahrzeugs und die B-Säule desselben ab. Das vordere Ende des Schutzkissens 10 ist mittels eines ersten Spannbandes 16 an einem mit A bezeichneten Punkt der A-Säule des Fahrzeugs befestigt. Das hintere Ende des Schutzkissens 10 ist mittels eines zweiten Spannbandes 18 an einem mit C bezeichneten Punkt der C-Säule des Fahrzeugs befestigt. Dieses Spannband 18 ist an seinem dem Schutzkissen 10 zugewandten Ende in zwei Spannbandabschnitte 18a, 18b verzweigt. Das freie Ende des oberen Spannbandabschnitts 18a ist etwa auf halber Höhe des aufgeblasenen Schutzkissens 10 an diesem angeschlossen. Das freie Ende des unteren Spannbandabschnitts 18b greift am unteren Randbereich 14 des aufgeblasenen Schutzkissens 10 an. Die Spannbandabschnitte 18a, 18b bilden im aufgeblasenen Zustand des Schutzkissens 10 einen stumpfen Winkel miteinander.

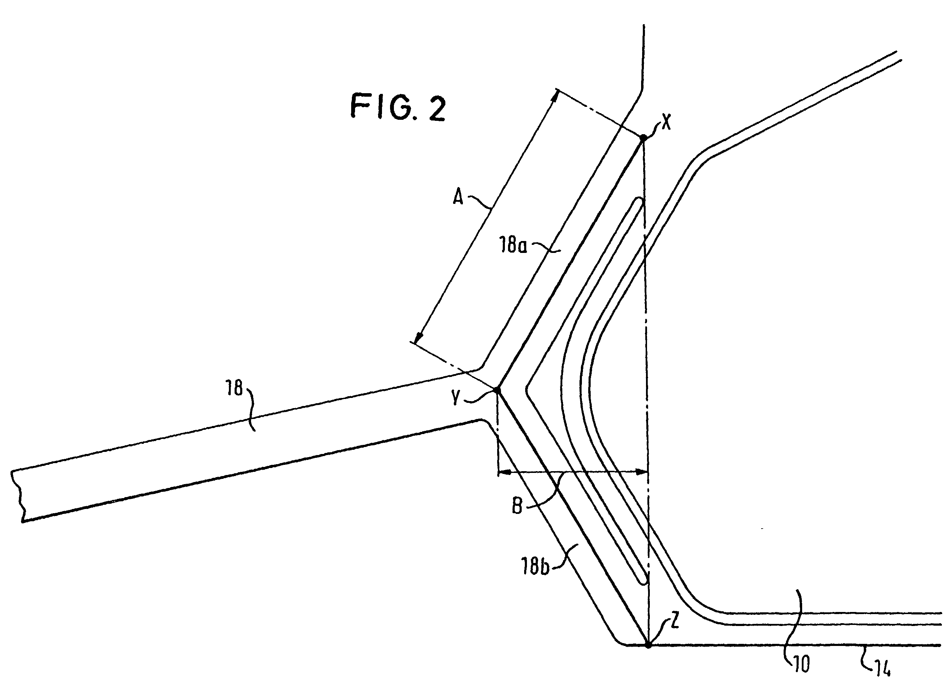

Zur Erläuterung der Wirkungsweise wird nun auf Fig. 2 Bezug genommen.

Im Ruhezustand des Schutzsystems ist das Schutzkissen 10 mit den Spannbändern 16, 18 entlang der gekrümmten Dachkante 12 des Fahrzeugs verstaut. Die Spannbandabschnitte 18a, 18b liegen übereinander in der Verlängerung des Spannbandes 18. Bei der gezeigten Ausführungsform ist die Länge A des Spannbandabschnitts 18a etwa gleich der Länge des Spannbandabschnitts 18b. Am Punkt Y sind die Spannbandabschnitte 18a, 18b miteinander und mit dem Spannband 18 verbunden. Das freie Ende des Spannbandabschnitts 18a ist am Punkt X am Schutzkissen 10 angeschlossen. Das freie Ende des Spannbandabschnitts 18b ist am Punkt Z am unteren Randbereich 14 des Schutzkissens 10 angeschlossen. Im aufgeblasenen Zustand hat der Verbindungspunkt Y den Abstand B von der Verbindungslinie X-Z zwischen den Anschlußpunkten der Spannbandabschnitte 18a, 18b am Schutzkissen 10. Dieser Abstand B beträgt aufgrund der geometrischen Verhältnisse nur etwa die Hälfte der Länge A jedes Spannbandabschnitts 18a, 18b. Infolgedessen tritt beim Aufblasen des Schutzkissens 10 durch die Spreizung der Spannbandabschnitte 18a, 18b die angestrebte Verkürzung der effektiven Abspannlinie um das Maß A-B auf.

An einem Ende des Schutzkissens (10) kann eine einfache Abspannung mittels des Spannbandes 16 ausreichen. Bei Bedarf wird aber auch hier eine Anordnung entsprechend dem Spannband 18 mit den zwei Spannbandabschnitten 18a, 18b vorgesehen.

## Patentansprüche

1. Seitenaufprall-Schutzsystem für Fahrzeuge, mit einem aufblasbaren, langgestreckten Schutzkissen (10), das an seinem vorderen Ende und seinem hinteren Ende jeweils mittels eines Spannbandes (16, 18) zwischen festen Punkten (A,C) im Fahrzeug verspannt wird, wobei wenigstens eines (18) der Spannbänder an seinem dem Schutzkissen (10) zugewandten Ende in zwei Spannbandabschnitte (18a, 18b) verzweigt, die in verschiedener Höhe am aufgeblasenen Schutzkissen angreifen, **dadurch gekennzeichnet, daß** die zwei Spannbandabschnitte (18a, 18b) im gespannten Zustand einen stumpfen Winkel miteinander bilden.

2. Seitenaufprall-Schutzsystem nach Anspruch 1, **dadurch gekennzeichnet, daß** einer (18b) der Spannbandabschnitte am unteren Randbereich des aufgeblasenen Schutzkissens (10) angreift.

3. Seitenaufprall-Schutzsystem nach Anspruch 2, **dadurch gekennzeichnet, daß** der andere Spannbandabschnitt (18a) etwa auf halber Höhe des aufgeblasenen Schutzkissens (10) oder darüber an diesem angreift.

4. Seitenaufprall-Schutzsystem nach einem der vorstehenden Ansprüche, **dadurch gekennzeichnet, daß** das vom Schutzkissen (10) abgewandte Ende des Spannbandes (18) etwa auf Höhe des unteren Randbereiches des aufgeblasenen Schutzkissens (10) am Fahrzeug befestigt ist.

## Claims

1. A side-impact protection system for vehicles, comprising an inflatable elongated protective cushion (10) which is braced at its front end and its rear end in the vehicle between fixed points (A, C) by means of a tensioning strap (16, 18) each, at least one (18) of the tensioning straps, at its end facing the protective cushion (10), branching into two tensioning strap sections (18a, 18b) engaging the inflated protective cushion at different levels, **characterized in that** the two tensioning strap sections (18a, 18b) define an obtuse angle in the tensioned condition.

2. The side-impact protection system as set forth in claim 1, **characterized in that** one (18b) of the tensioning strap sections engages the lower edge portion of the inflated protective cushion (10).

3. The side-impact protection system as set forth in claim 2, **characterized in that** the other tensioning strap section (18a) engages the inflated protective cushion (10) approximately at half of its height or above.

4. The side-impact protection system as set forth in any of the preceding claims, **characterized in that** the end of the tensioning strap (18) facing away from the protective cushion (10) is secured to the vehicle approximately at the level of the lower edge portion of the inflated protective cushion (10).

## Revendications

1. Système de protection contre les chocs latéraux, comportant un coussin de protection (10) gonflable allongé qui est tendu à son extrémité antérieure et à son extérieure postérieure par un ruban de serrage (16, 18) respectif entre des points fixes (A, C) sur le véhicule, au moins un (18) des rubans de serrage se ramifiant à son extrémité tournée vers le coussin de protection (10) en deux tronçons de ruban de serrage (18a, 18b) qui s'engagent à différentes hauteurs sur le coussin de protection, **caractérisé en ce que** les deux tronçons de ruban de serrage (18a, 18b) forment ensemble un angle obtus à l'état de serrage.

2. Système de protection contre les chocs latéraux selon la revendication 1, **caractérisé en ce qu'**un (18b) des tronçons de ruban de serrage (18b) s'engage sur la région de bord du coussin de protection (10) gonflé.

3. Système de protection contre les chocs latéraux selon la revendication 2, **caractérisé en ce que** l'autre tronçon de ruban de serrage (18a) s'engage sur le coussin de protection (10) gonflé approximativement à mi-hauteur ou au-dessus.

4. Système de protection contre les chocs latéraux selon l'une des revendications précédentes, **caractérisé en ce que** l'extrémité du ruban de serrage (18), qui est détournée du coussin de protection (10), est fixée au véhicule approximativement à la hauteur de la région de bord inférieure du coussin de protection (10) gonflé.
